# EUROPÄISCHE PATENTSCHRIFT

(11) **EP 1 155 909 B1**
(45) Veröffentlichungstag und Bekanntmachung des Hinweises auf die Patenterteilung: **22.11.2006**
(21) Anmeldenummer: 01111606.8
(22) Anmeldetag: 12.05.2001
(51) Int. Cl.: B60Q 1/44, H01H 3/14, H01H 21/26

(54) **Pedalweggebereinheit**
Pedal position sensing device
Capteur de position de pédale

(30) Priorität: 19.05.2000 DE 10024921
(43) Veröffentlichungstag der Anmeldung: 21.11.2001
(73) Patentinhaber: DEERE & COMPANY, Moline, Illinois 61265-8098 (US); ASG Luftfahrttechnik und Sensorik GmbH, 69445 Weinheim (DE)
(72) Erfinder: Becker, Manfred, 67227 Frankenthal (DE); Kapell, Ralf, 64404 Bickenbach (DE); Oberheim, Rainer, 64625 Bensheim (DE)
(74) Vertreter: Lau-Loskill, Philipp

(56) Entgegenhaltungen:
- DE-U- 1 791 679
- FR-A- 1 481 263
- US-A- 2 301 584

## Beschreibung

Die Erfindung betrifft eine Pedalweggebereinheit zur Ermittlung einer Pedalwegstellung. Die Pedalweggebereinheit enthält wenigstens einen Betätigungshebel und wenigstens ein Schaltelement. Der Betätigungshebel ist in einem Gehäuse angeordnet, auf einer Drehachse gelagert und durch ein Pedal verdrehbar. Das Betätigungsglied des Schaltelements ist durch Verdrehen des Betätigungshebels betätigbar.

Bei Fahrzeugen ist es üblich im Bereich eines Pedals einen oder mehrere elektrische Schalter anzuordnen, welche die Pedalstellung erfassen und entsprechende Steuersignale ausgeben. Beispielsweise hat ein landwirtschaftlicher Schlepper ein rechtes und ein linkes Bremspedal, die zum Durchfahren enger Kurven separat betätigbar sind. Jedes Bremspedal wirkt unmittelbar auf einen Bremszylinder. Im Bewegungsbereich jedes Bremspedals befindet sich das Auslöseelement eines Bremslichtschalters, welcher beim Betätigen des Pedals umschaltet und ein elektrisches Signal an die Bremsleuchte abgibt. Der Umschaltpunkt unterliegt dabei häufig einer relativ ausgeprägten Hysterese, was für die Bremsleuchtenbetätigung hinnehmbar ist.

Es ist wünschenswert, neben den Bremsleuchten weitere Fahrzeugfunktionen, wie die Zuschaltung eines Vorderradantriebs und die Betätigung einer Differentialsperre, von der Bremspedalstellung abhängig zu machen. Diese Funktionen machen es jedoch erforderlich, den Umschaltpunkt des Schalters relativ genau auf den Pedalhub abzustimmen.

Durch die US-A-5,920,048 wurde für ein Elektrofahrzeug vorgeschlagen, die Stellung des Beschleunigungspedals und des Bremspedals durch Einrichtungen zu erfassen, bei denen in einem Gehäuse ein elektrischer Schalter und ein verstellbarer Widerstand angeordnet sind. Durch das Gehäuse verläuft eine Welle, die mit dem Beschleunigungspedal bzw. dem Bremspedal in Verbindung steht und sich entsprechend der Pedalbewegung verdreht. Die Welle ist mit einem verschwenkbaren Aus der US 2,301,584 ist eine Pedalweggebereinheit gemäß dem Oberbegriff des Patentanspruchs 1 bekannt.

Betätigungselement verbunden, welches beim Verdrehen der Welle auf den Schalter einwirkt. Am Betätigungselement ist eine Schleiffeder befestigt, die sich beim Verdrehen der Welle über eine Widerstandsschicht bewegt und damit den Widerstand eines elektrischen Kreises verändert, so daß ein Signal erzeugt wird, das der Pedalstellung entspricht. Diese Einrichtung ist relativ aufwendig ausgebildet, da sie eine mit einem Pedal in Verbindung stehende Welle erfordert. Die Anpassung an vorhandene Pedalanordnungen kann schwierig sein. Die Einrichtung ist wegen der mechanischen Schleifkontakte relativ störungsanfällig und ungenau.

Die der Erfindung zugrunde liegende Aufgabe wird darin gesehen, eine Pedalweggebereinheit der eingangs genannten Art anzugeben, durch welche die vorgenannten Probleme überwunden werden. Insbesondere soll die Pedalweggebereinheit eine zuverlässige Erfassung der Pedalstellung mit reproduzierbaren, weitgehend hysteresefreien Schaltpunkten erlauben, einfach aufgebaut sein und eine einfache Montage ohne das Erfordernis von Anpassungsmaßnahmen und Nachjustagen ermöglichen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist das Gehäuse der eingangs genannten Pedalweggebereinheit eine Gehäuseöffnung auf, die einen äußeren Zugang zu einem außerhalb der Drehachse liegenden Bereich des Betätigungshebels ermöglicht, um den Betätigungshebel dem Einfluß einer Pedalbewegung auszusetzen. Dies bedeutet, daß das Pedal unmittelbar, ohne Zwischenschaltung weiterer Bauteile, wie Wellen, Hebel, und dergleichen, auf den verschwenkbar gelagerten Betätigungshebel einwirkt. Die Drehlagerung des Betätigungshebels ist von besonderem Vorteil, weil durch sie, im Gegensatz zu linearen Bewegungen, das Risiko eines Verklemmens oder Festsitzens erheblich reduziert wird.

Hysterese-Effekte werden hierdurch weitgehend vermieden.

Die Pedalweggebereinheit läßt sich somit als einfaches, vorjustiertes Bauteil separat herstellen und mit einfachen Mitteln, beispielsweise durch Schraubverbindungen, ohne das Erfordernis von Anpassungsmaßnahmen und Nachjustagen in der Nähe des Pedalhebels befestigen. Besondere Vorkehrungen für die Kraftübertragung zwischen Pedalhebel und dem Betätigungshebel der Pedalweggebereinheit sind nicht erforderlich.

Es ist von besonderem Vorteil den Betätigungshebel als Winkelhebel auszubilden, der an seinem ersten Schenkelende drehbar im Gehäuse gelagert ist. Der Endbereich des zweiten Hebelschenkels tritt mit seiner Stirnseite aus der Gehäuseöffnung aus. An der Stirnseite dieses Schenkels liegt der Pedalhebel an, wobei die Pedalkraft im wesentlichen senkrecht auf die Stirnseite einwirkt und den Winkelhebel um seine Drehachse verschwenkt. Die beiden Schenkel des Winkelhebels können beispielsweise einen Winkel von ca. 90° zueinander einnehmen. Die Ausbildung als Winkelhebel hat den Vorteil, daß im Gehäuse lediglich eine relativ kleine Gehäuseöffnung für das zweite Schenkelende ausgebildet sein muß, da dieses Schenkelende keine nennenswerte Querbewegung hinsichtlich der Gehäuseöffnung ausführt.

Vorzugsweise ist das Gehäuse kompakt und stabil ausgebildet. Die Gehäusewandungen, insbesondere auch die Durchführungen für elektrische Leitungen, sind hermetisch abgedichtet, so daß Umgebungseinflüsse wie Staub und Spritzwasser die Funktionsweise der Pedalweggebereinheit nicht beeinträchtigen. Im Bereich der Gehäuseöffnung ist das Gehäuse gegenüber dem Betätigungshebel, insbesondere gegenüber dessen zweiten Schenkelende, durch eine flexible Gummimanschette abgedichtet.

Zweckmäßigerweise ist das Betätigungsglied des Schaltelements im Bereich des Knies des Winkelhebels angeordnet und liegt ungefähr gegenüber der Stirnseite des zweiten Schenkelendes. Im Kniebereich ist die Auslenkung des Winkelhebels am größten, so daß das Schaltelement relativ genau auf Betätigungen des Pedalhebels ansprechen kann.

Bei dem Schaltelement handelt es sich vorzugsweise um einen Mikroschalter mit einem Schaltdruckknopf als Betätigungselement. Geeignete Mikroschalter werden beispielsweise durch die Firmen Cherry und Honeywell mit Niederlassungen in Auerbach/Opf., DE bzw. Offenbach, DE unter der Bezeichnung Micro Switch oder Miniatur-Basisschalter vertrieben. Es handelt sich um kostengünstige Massenartikel, die mechanisch belastbar und vielseitig einsetzbar sind. Das Besondere an diesen Schaltern ist ihr hohes Schaltvermögen (beispielsweise 25 A) bei kleiner Baugröße (beispielsweise 30 mm x 20 mm x 10 mm).

Um zu vermeiden, daß die ganze auf dem Betätigungshebel lastende Kraft auf das Betätigungsglied des Schaltelements übertragen wird, wodurch das Schaltelement beschädigt oder dessen Schaltpunkt verändert werden kann, schlägt eine bevorzugte Weiterbildung der Erfindung vor, daß der Betätigungshebel nicht unmittelbar auf das Betätigungsglied einwirkt, sondern daß an dem Betätigungshebel eine Federzunge befestigt ist, deren freies Ende auf das Betätigungsglied des Schaltelements einwirkt.

Vorzugsweise ist in der Bewegungsbahn der Federzunge wenigstens ein Anschlag angeordnet, der den Auslenkbereich der Federzunge begrenzt. Der Anschlag kann beispielsweise in die Gehäusekontur integriert sein.

Der Betätigungshebel wird durch eine Feder in eine Lage gedrängt, die mit der Lage des niedergedrückten Pedals (z. B. Bremsstellung) korrespondiert und bei der das Betätigungsglied des Schaltelements nicht durch den Betätigungshebel betätigt wird. Zweckmäßiger Weise greift die Feder, beispielsweise eine schraubenförmige Druckfeder, im Kniebereich des Betätigungshebel an und drängt den Betätigungshebel gegen die Kraftrichtung einer Pedalbetätigung.

Entsprechend einer besonders bevorzugten Ausgestaltung der Erfindung wirkt der Betätigungshebel auf wenigstens eine Meßeinrichtung zur Erzeugung eines der jeweiligen Drehstellung des Betätigungshebels entsprechenden elektrischen Signals ein. Neben dem Schaltsignal des Schaltelementes steht damit auch ein analoges, der Drehstellung des Betätigungshebels und damit dem Pedalhub entsprechendes elektrisches Signal zur Verfügung.

Es hat sich als besonders vorteilhaft erwiesen, bei der Meßeinrichtung wenigstens einen Hallsensor und wenigstens einen Magneten zu verwenden. Eine derart ausgebildete Meßeinrichtung arbeitet berührungslos, enthält keine Schleifkontakte und ermöglicht bei hoher Meßgenauigkeit die zuverlässige, durch Korrosion und andere Störeinflüsse weitgehend unabhängige Aufnahme von Meßwerten. Ein Hallsensor spricht sehr empfindlich auf Änderungen des magnetischen Flusses an, so daß kleine Winkelbewegungen des Betätigungshebels erfaßt werden können. Die Kennlinie des Hallsensors, d. h. die Abhängigkeit des Sensorsignals von der Lage des Betätigungshebels, läßt sich auf einfache Weise durch Anpassung der elektrischen HallsensorBeschaltung oder durch Programmierung der Auswerteelektronik auf vorgegebene Wünsche oder Anforderungen anpassen. An die Genauigkeit der Montage von Hallsensor und Permanentmagnet müssen somit keine hohen Anforderungen gestellt werden, da Abweichungen nachträglich durch elektrische oder elektronische Justage ausgeglichen werden können.

Vorzugsweise ist auf dem Betätigungshebel ein sich mitbewegender Permanentmagnet angeordnet, während sich der Hallsensor ortsfest im Gehäuse im Magnetfeldbereich des Permanentmagneten befindet. Wenn der Permanentmagnet durch eine Betätigung des Betätigungshebels bewegt wird, verändert sich der magnetische Fluß im Bereich des Hallsensors und damit dessen Ausgangssignal.

Gemäß einer bevorzugten Weiterbildung der Erfindung ist der Permanentmagnet auf dem Betätigungshebel im Bereich dessen Drehachse angeordnet und so ausgerichtet, daß seine den magnetischen Nordpol und den magnetischen Südpol verbindende Linie in etwa senkrecht zur Drehachse des Betätigungshebels ausgerichtet ist.

Für einen weitgehend linearen Zusammenhang zwischen der Pedalstellung und damit der Schwenkstellung des Betätigungshebels einerseits und dem Sensorsignal andererseits ist eine besonders günstige Anordnung des Hallsensors dadurch gegeben, daß der Hallsensor in etwa in der zwischen dem magnetischen Nordpol und dem magnetischen Südpol des Permanentmagneten verlaufenden Mittelebene angeordnet ist. Bei dieser Anordnung bewegt sich beim Verdrehen des Betätigungshebels der Permanentmagnet nahezu linear längs seiner Nord-Süd-Ausrichtung am Hallsensor vorbei. Daher ist das Hallsensorsignal in etwa proportional zur Drehstellung des Permanentmagneten und damit proportional zur Auslenkung des Betätigungshebels und des Pedalhubs.

Um die Meßeinrichtung und weiterer elektrischer Bauteile im Sensorgehäuse vor äußeren Störmagnetfeldern zu schützen, ist es zweckmäßig, im Gehäuse eine magnetische Abschirmung, beispielsweise ein Eisenblech, anzuordnen.

Insbesondere für Fahrzeuge mit zwei Bremspedalen, die unabhängig voneinander betätigbar sind, ist eine Pedalweggebereinheit von Vorteil, bei der in einem einzigen abgedichteten Gehäuse zwei Betätigungshebel drehbar gelagert sind, die jeweils der Einwirkung eines zugehörigen Bremspedals ausgesetzt sind. Jedem der beiden Betätigungshebel ist wenigstens ein Schaltelement und/oder wenigstens eine Meßeinrichtung zugeordnet.

Um eine Auswertung der Signale der Schaltelemente und Meßeinrichtungen unmittelbar in der Pedalweggebereinheit vornehmen zu können, kann es von besonderem Vorteil sein, wenn im Gehäuse der Pedalweggebereinheit weitere elektrische oder elektronische Komponenten angeordnet sind. Besonders bevorzugt ist hierbei die Aufnahme eines oder mehrerer Relais und/oder gedruckter Leiterplatten mit elektrischer Beschaltung. Durch diese Maßnahmen lassen sich die Anforderungen an den Kabelbaum und die Steckvorrichtung, mit dem der Kabelbaum an die Pedalweggebereinheit angeschlossen wird, reduzieren.

Die erfindungsgemäße Pedalweggebereinheit läßt sich in besonders vorteilhafter Weise als vormontierbarer Modul ausbilden, bei dem alle die Pedalstellung erfassenden Bauteile in einem hermetisch abgeschlossenen Gehäuse untergebracht sind. Dieser Modul kann beispielsweise von einem Komponentenlieferanten komplett gefertigt und justiert werden. Er läßt sich dann als Einheit bei der Endmontage des Fahrzeugs im Bereich des Pedals befestigen, ohne daß Nachjustagen erforderlich sind.

Die modulare Ausbildung ermöglicht es auch, daß für unterschiedliche Anforderungen bei einheitlicher Gehäuseform und identischer Ausbildung des oder der Betätigungshebel unterschiedliche Optionen bereitgestellt werden. So können beispielsweise in einem Standardgehäuse mit zwei Betätigungshebeln entweder zwei Schalter und lediglich ein Sensor, oder zwei Schalter und ein Relais, oder zwei Schalter und zwei Sensoren, oder zwei Schalter, zwei Sensoren und ein Relais angeordnet sein.

Die erfindungsgemäße Pedalweggebereinheit ermöglicht eine zuverlässige Erfassung der Pedalstellung bei hoher Empfindlichkeit der Meßeinrichtung und bei reproduzierbaren Schaltpunkten des Schaltelements. Durch die genaue Vorjustage können Hysterese-Effekte der Schaltelemente vermieden oder vermindert werden. Das der Pedalstellung entsprechende Signal der Meßeinrichtung kann beispielsweise zur elektronischen Steuerung des Fahrzeugmotors oder zur Beeinflussung der Motorkennlinie herangezogen werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Ansicht auf eine Bremspedalanordnung mit zwei Bremspedalen,
- Fig. 2: die perspektivische Ansicht einer erfindungsgemäßen Pedalweggebereinheit,
- Fig. 3: das Schnittbild einer erfindungsgemäßen Pedalweggebereinheit,
- Fig. 4: die Darstellung eines Betätigungshebels und
- Fig. 5: ein elektrisches Schaltdiagramm für eine erfindungsgemäße Pedalweggebereinheit.

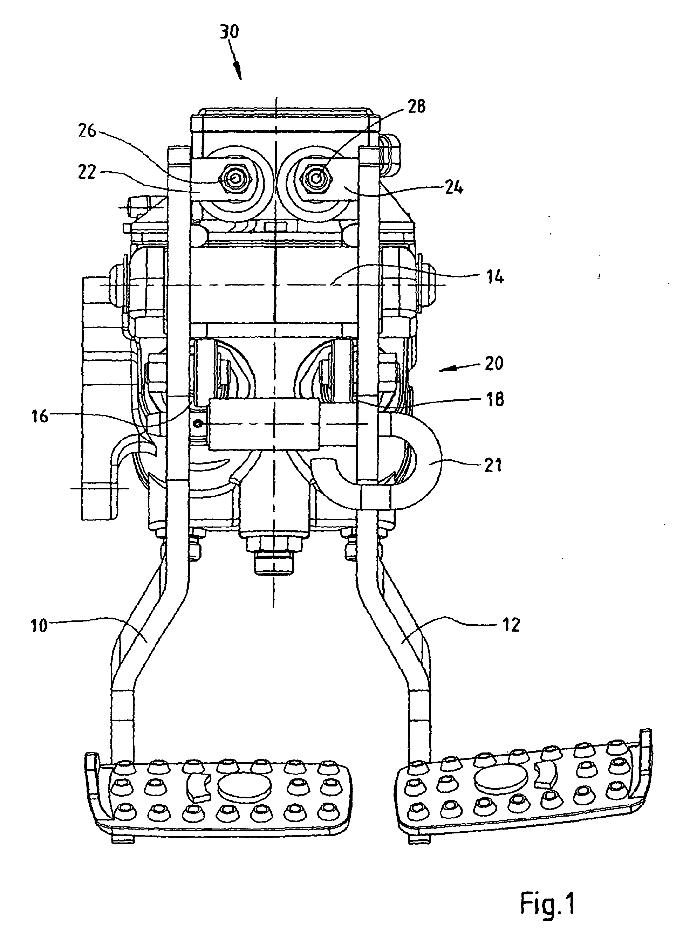

Die in Fig. 1 dargestellte Bremspedalanordnung enthält zwei Bremspedale 10, 12, die in einer Drehachse 14 verschwenkbar gelagert sind. Jedes Bremspedal 10, 12 wirkt auf einen zugehörigen Bremskolben 16, 18, wobei beide Bremskolben 16, 18 in einem gemeinsamen Bremsventilgehäuse 20 angeordnet sind. Die Bremspedale 10, 12, können unabhängig voneinander betätigt werden. Sie lassen sich jedoch durch einen Verriegelungsbügel 21 miteinander derart verbinden, daß bei Betätigung eines der Bremspedale 10, 12 das jeweils andere Bremspedal 10, 12 mitgenommen wird, so daß beide Bremskolben 16, 18 betätigt werden.

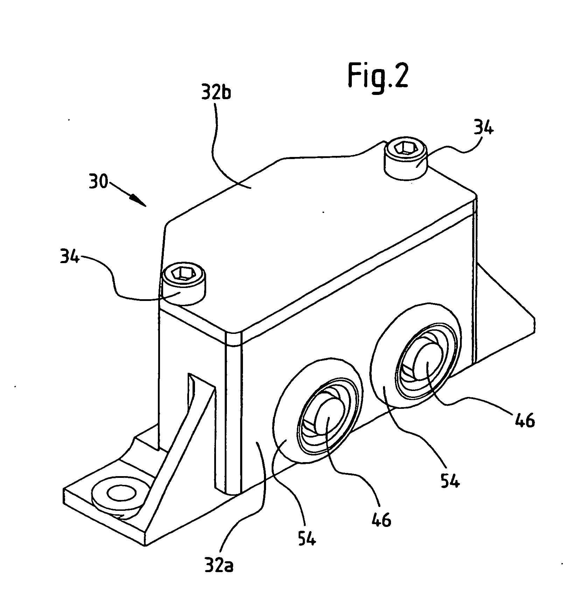

Am oberen freien Ende jedes Bremspedals 10, 12, ist eine Querlasche 22, 24 angeformt, die jeweils eine Stellschraube 26, 28 aufnimmt. Durch Verdrehen der Stellschrauben 26, 28 läßt sich einstellen, wie weit sie aus der jeweiligen Lasche 22, 24 herausragen. Dies ermöglicht Anpassung an die Auslöseelemente der Pedalweggebereinheit. Die Stellschrauben 26, 28 lassen sich auf übliche Weise durch nicht dargestellte Kontermuttern in ihrer jeweiligen Lage fixieren. In Höhe der Laschen 22, 24 ist auf dem Bremsventilgehäuse 20 eine in Fig. 2 perspektivisch dargestellte Pedalweggebereinheit 30 mit zwei Schrauben festgeschraubt.

Das Gehäuse 32 der Pedalweggebereinheit besteht aus einem topfförmigen Basisteil 32a und einem Deckel 32b, der durch zwei Schrauben 34 am Basisteil 32a befestigt werden kann und unter Verwendung einer nicht dargestellten Dichtung das Basisteil 32a hermetisch verschließt. Der Deckel kann auch mit dem Basisteil verschweißt sein.

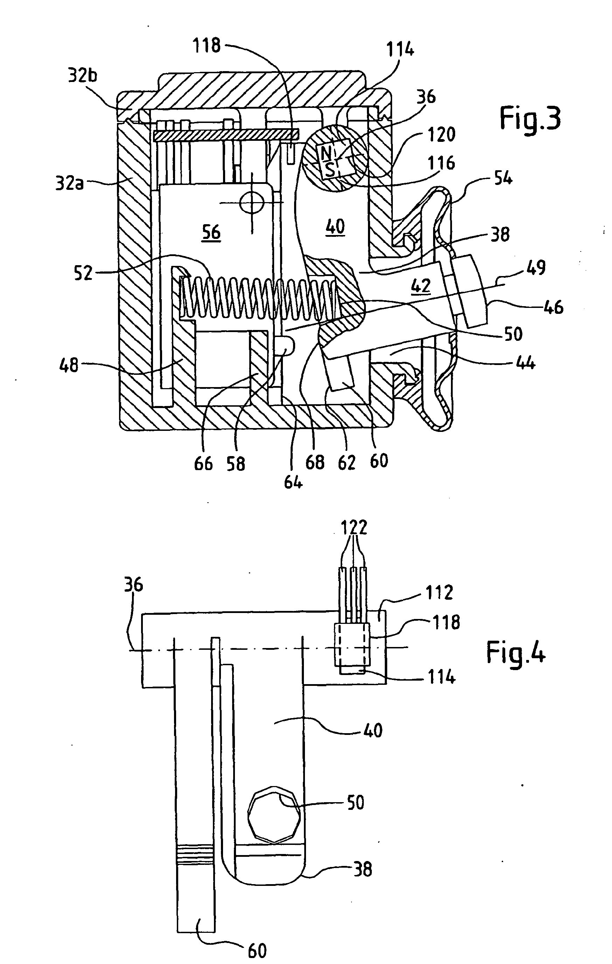

In dem Sensorgehäuse 32 sind zwei um eine Drehachse 36 verschwenkbare im wesentlichen gleichartige Betätigungshebel 38 gelagert, von denen in Fig. 3 lediglich einer sichtbar dargestellt ist. Der Betätigungshebel 38 ist als Winkelhebel ausgebildet und besitzt einen ersten Schenkel 40, an dessen freiem Endbereich der Betätigungshebel 38 um eine Drehachse 36 drehbar gelagert ist. Der zweite Schenkel 42 des Winkelhebels ragt durch eine Gehäuseöffnung 44 aus dem Sensorgehäuse 32 heraus. Die beiden Schenkel 40, 42 nehmen einen Winkel zueinander ein, der nahezu 90° ist.

Der Winkelhebel 38 weist aus Gründen der Materialersparnis und der Gewichtsreduktion nicht näher dargestellte Hohlräume auf. Er enthält im Kniebereich 68 eine Ausnehmung 50, in die ein Ende einer schraubenförmige Druckfeder 52 eingreift, welche sich mit ihrem anderen Ende an einer Zwischenwand 48 des Sensorgehäuses 32 abstützt. Die Druckfeder 52 drückt den zweiten Schenkel 42 durch die Gehäuseöffnung 44 des Sensorgehäuses 32 nach außen, so daß die Stirnseite 46 des zweiten Schenkels 42 an der zugehörigen Stellschraube 26, 28 anliegt. Der zweite Schenkel 42 ist so ausgerichtet, daß seine Mittellinie 49 etwa die Mitte der Stirnseite 46 des zweiten Schenkels 42 schneidet und auf das Betätigungsglied 58 eines Schaltelements 56 gerichtet ist.

Im Bereich der Gehäuseöffnung 44 ist eine flexible Gummimanschette 54 vorgesehen, die das Sensorgehäuse 32 gegenüber dem zweiten Schenkel 42 des Winkelhebels 38 abdichtet. Die Gummimanschette 54 läßt einen ausreichenden Bewegungshub des Winkelhebels 38 zu.

Jedem der beiden Betätigungshebel 38 ist ein im Gehäuseinneren montierter Mikroschalter 56 zugeordnet, von denen in Fig. 3 ebenfalls nur einer erkennbar ist. Der Mikroschalter 56 weist einen Schaltdruckknopf 58 auf, durch dessen Betätigung der Schaltzustand des Mikroschalters 56 beeinflußbar ist. Der Schaltdruckknopf 58 befindet sich im Kniebereich 68 des Betätigungshebels 38.

Wie aus Fig. 4 genauer hervorgeht, enthält der Betätigungshebel 38 eine Federzunge 60, die im Bereich der Drehachse 36 angeformt ist und sich im wesentlichen parallel zum ersten Schenkel 40 erstreckt. Das freie Ende der Federzunge 60 weist eine Kontaktfläche 62 auf, die dem Schaltdruckknopf 58 gegenüberliegt und bei einer Betätigung des zugehörigen Bremspedals 10, 12 gegen den Schaltdruckknopf 58 gedrückt wird, wodurch eine Schaltfunktion des Mikroschalters 56 ausgelöst wird. Dem freien Ende der Federzunge 60 liegt eine Gehäusekante 64 gegenüber, die die Auslenkung der Federzunge 60 begrenzt und so den Schaltdruckknopf 58 vor übermäßiger Belastung schützt. Der Hub des Betätigungshebels 38 ist durch eine innere Gehäusewandung 66 begrenzt, gegen die bei voller Betätigung des Betätungshebels 38 dessen Kniebereich 68 stößt. Auch diese Maßnahme schützt vor Beschädigungen.

Im Bereich der Drehachse 36 ist der Betätigungshebel 38 zylinderförmig ausgebildet. In einem zylindrischen Endabschnitt 112 befindet sich eine Ausnehmung, in die ein Permanentmagnet 114 eingeformt ist. Der Permanentmagnet 114 ist derart angeordnet, daß seine den magnetischen Nordpol N und den magnetischen Südpol S verbindende Linie 116 senkrecht zur Drehachse 36 ausgerichtet ist. In der Nähe des Permanentmagneten 114 ist in dem Sensorgehäuse 32 ein Hallsensor 118 mit elektrischen Zuleitungen 122 befestigt. Der Hallsensor 118 ist etwa in der zwischen dem magnetischen Nordpol N und dem magnetischen Südpol S des Permanentmagneten 114 verlaufenden Mittelebene 120 angeordnet.

Neben den genannten Bauelementen können in dem Sensorgehäuse 32 weitere, nicht deutlich dargestellte elektrische Bauelemente wie Relais und beschaltete Leiterplatten untergebracht sein. In der Gehäusewandung befindet sich wenigstens eine nicht näher dargestellte, hermetisch abgedichtete Durchführung für elektrische Leitungen. Die Leitungen verbinden die elektrischen Komponenten im Inneren des Sensorgehäuses 32 mit den Steckerkontakten eines in das Sensorgehäuse 32 integrierten nicht dargestellten Steckers. An den Stecker läßt sich ein Fahrzeugkabelbaum anschließen.

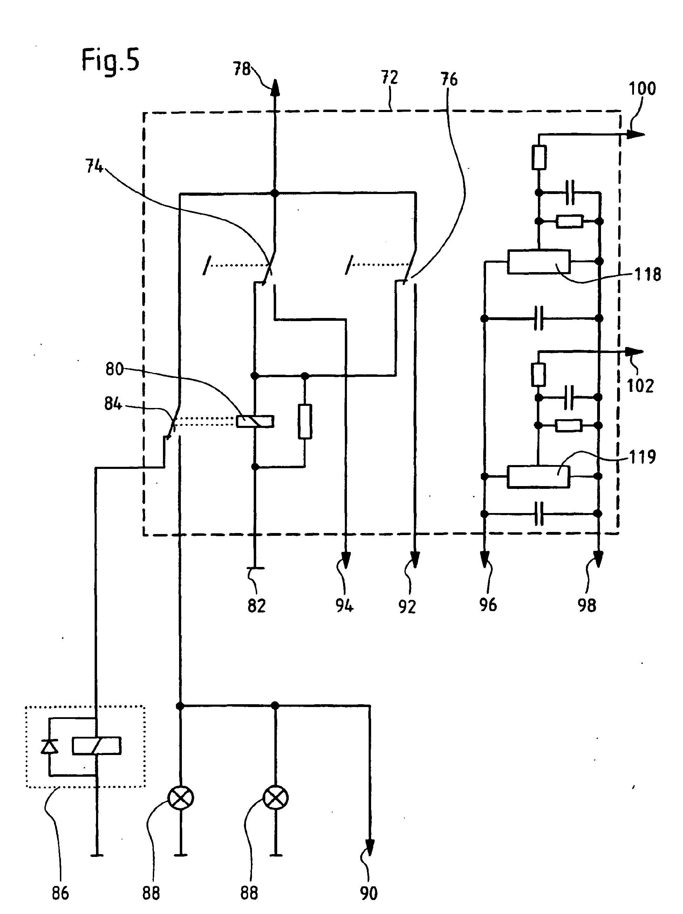

Der in Fig. 5 dargestellte elektrische Schaltkreis, welcher innerhalb des Gehäuses 32 der Pedalweggebereinheit angeordnet ist, wurde in Fig. 5 durch eine gestrichelte Linie 72 angedeutet. Die mit üblichen Symbolen dargestellten Bauelemente wie Schalter, Hallsensoren, Relais, Widerstände und Kondensatoren können auf einer in dem Sensorgehäuse 32 angeordneten, nicht näher dargestellten elektrischen Leiterplatte montiert sein.

Der dargestellte Schaltkreis enthält zwei Bremspedalschalter 74, 76, die dem in Fig. 3 dargestellten Mikroschalter 56 entsprechen und jeweils einem von zwei Bremspedalen 10, 12 zugeordnet sind. Ein Batterieanschluß 78 der Bremspedalschalter 74, 76 ist mit der nicht gezeigten Fahrzeugbatterie verbunden. In der dargestellten Ruhelage der Bremspedalschalter 74, 76, d. h. bei unbetätigten Bremspedalen 10, 12, steht der Batterieanschluß 78 über die Bremspedalschalter 74, 76 mit einem Relais 80, dessen zweiter Anschluß 82 an Masse liegt, in Verbindung. Das Relais 80 betätigt eine Schaltstelle 84, die den Batterieanschluß 78 mit einem Bremsventilrelais 86 verbindet, welches der nicht dargestellten Luftdruckbremse eines Fahrzeuganhängers zugeordnet ist.

Wenn beide Bremspedalschalter 74, 76 durch Betätigung der Bremspedale 10, 12 umschalten, fällt das Relais 80 ab und schaltet die Schaltstelle 84 um, so daß nun der Batterieanschluß 78 einerseits mit den Bremsleuchten 88 des Fahrzeugs verbunden ist und andererseits über einen Anschluß 90 nicht gezeigte Bremsleuchten eines Fahrzeuganhängers mit Spannung versorgt. Bei Betätigung eines Bremspedals 10, 12 gibt der zugehörige Bremspedalschalter 74, 76 über einen Anschluß 92, 94 ein entsprechendes Spannungssignal an eine nicht näher dargestellte elektrische Fahrzeugsteuerung aus.

Des weiteren sind zwei Hallsensoren 118, 119 dargestellt, die je einem Bremspedal 10, 12 zugeordnet sind. Die Beschaltung der Hallsensoren 118, 119 mit Widerständen und Kondensatoren erfolgt auf übliche Weise und bedarf keiner weiteren Erläuterung, weil sie für den Fachmann offensichtlich ist. Die Hallsensoren 118, 119 sind über einen ersten Anschluß 96 mit einer 5V-Spannungsquelle und über einen zweiten Anschluß 98 mit Masse verbunden. Die Ausgangsleitungen 100, 102 der Hallsensorbeschaltung stehen mit einer nicht gezeigten Fahrzeugsteuerung in Verbindung, welche die durch die Hallsensoren 118, 119 erfaßte Bremspedalstellung auf geeignete Weise auswertet.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Pedalweggebereinheit zur Ermittlung einer Pedalwegstellung mit wenigstens einem, in einem Gehäuse (32) angeordneten, auf einer Drehachse (36) gelagerten und durch ein Pedal (10, 12) verdrehbaren Betätigungshebel (38) und mit wenigstens einem Schaltelement (56), dessen Betätigungsglied (58) durch Verdrehen des Betätigungshebels (38) betätigbar ist, wobei das Gehäuse (32) eine Gehäuseöffnung (44) aufweist, die einen äußeren Zugang zu einem außerhalb der Drehachse (36) liegenden Bereich des Betätigungshebels (38) ermöglicht, um den Betätigungshebel (38) dem Einfluß einer Pedalbewegung auszusetzen, **dadurch gekennzeichnet, daß** der Betätigungshebel (38) auf wenigstens eine Meßeinrichtung (114, 118) zur Erzeugung eines der jeweiligen Drehstellung des Betätigungshebels (38) entsprechenden elektrischen Signals einwirkt.

2. Pedalweggebereinheit nach Anspruch 1, **dadurch gekennzeichnet, daß** der Betätigungshebel (38) ein Winkelhebel ist, der an seinem ersten Schenkelende (40) drehbar gelagert ist und dessen zweites Schenkelende (42) mit seiner Stirnseite (46) aus der Gehäuseöffnung (44) heraustritt und einer im wesentlichen senkrecht auf die Stirnseite (44) wirkenden Pedalkraft ausgesetzt ist.

3. Pedalweggebereinheit nach Anspruch 1 oder 2, **dadurch gekennzeichnet, daß** an der Gehäuseöffnung (44) das Gehäuse (32) gegenüber dem Betätigungshebel (38), insbesondere gegenüber dem zweiten Schenkelende (42), durch eine flexible Gummimanschette (54) abgedichtet ist.

4. Pedalweggebereinheit nach Anspruch 2 oder 3, **dadurch gekennzeichnet, daß** das Betätigungsglied (58) des Schaltelements (56) im Bereich des Knies (68) des Winkelhebels (38) in und ungefähr gegenüber der Stirnseite (44) des zweiten Schenkelendes (42) angeordnet ist.

5. Pedalweggebereinheit nach einem der Ansprüche 1 bis 4, **dadurch gekennzeichnet, daß** das Schaltelement (56) als ein Mikroschalter mit einem Schaltdruckknopf (58) ausgebildet ist.

6. Pedalweggebereinheit nach einem der Ansprüche 1 bis 5, **dadurch gekennzeichnet, daß** an dem Betätigungshebel (38) eine Federzunge (60) befestigt ist, deren freies Ende auf das Betätigungsglied (58) des Schaltelements (56) einwirkt.

7. Pedalweggebereinheit nach Anspruch 6, **dadurch gekennzeichnet, daß** in der Bewegungsbahn der Federzunge (60) wenigstens ein Anschlag (64) angeordnet ist, der den Auslenkungsbereich der Federzunge (60) begrenzt.

8. Pedalweggebereinheit nach einem der Ansprüche 1 bis 7, **dadurch gekennzeichnet, daß** an dem Betätigungshebel (38), insbesondere in seinem Kniebereich (68), eine Feder (52) angreift, die den Betätigungshebel (38) gegen die Kraftrichtung einer Pedalbetätigung drängt.

9. Pedalweggebereinheit nach einem der Ansprüche 1 bis 8, **dadurch gekennzeichnet, daß** die Meßeinrichtung wenigstens einen Hallsensor (118) und wenigstens einen Magneten (114) aufweist.

10. Pedalweggebereinheit nach Anspruch 9, **dadurch gekennzeichnet, daß** auf dem Betätigungshebel (38) ein Permanentmagnet (114) angeordnet ist, und daß der Hallsensor (118) ortsfest im Gehäuse (32) im Magnetfeldbereich des Permanentmagneten (114) angeordnet ist.

11. Pedalweggebereinheit nach Anspruch 9 oder 10, **dadurch gekennzeichnet, daß** der Permanentmagnet (114) auf dem Betätigungshebel (38) im Bereich der Drehachse (36) angeordnet und so ausgerichtet ist, daß seine den magnetischen Nordpol (N) und den magnetischen Südpol (S) verbindende Linie (116) in etwa senkrecht zur Drehachse (36) verläuft.

12. Pedalweggebereinheit nach einem der Ansprüche 9 bis 11, **dadurch gekennzeichnet, daß** der Hallsensor (118) in etwa in der zwischen dem magnetischen Nordpol (N) und dem magnetischen Südpol (S) des Permanentmagneten (114) verlaufenden Mittelebene (120) angeordnet ist.

13. Pedalweggebereinheit nach einem der Ansprüche 1 bis 12, **dadurch gekennzeichnet, daß** in dem Gehäuse (32) eine magnetische Abschirmung für die Meßeinrichtung (114, 118) angeordnet ist.

14. Pedalweggebereinheit nach einem der Ansprüche 1 bis 13, **dadurch gekennzeichnet, daß** in dem Gehäuse (32) zwei Betätigungshebel (38) drehbar gelagert sind, die jeweils der Einwirkung eines zugehörigen Bremspedals (10, 12) ausgesetzt sind und daß jedem Betätigungshebel (38) wenigstens ein Schaltelement (56) und/oder wenigstens eine Meßeinrichtung (114, 118) zugeordnet ist.

15. Pedalweggebereinheit nach einem der Ansprüche 1 bis 14, **dadurch gekennzeichnet, daß** in dem Gehäuse (32) wenigstens ein elektrisches Relais und/oder wenigstens eine gedruckte Leiterplatte mit elektrischer Beschaltung angeordnet ist.

16. Pedalweggebereinheit nach einem der Ansprüche 1 bis 15, **dadurch gekennzeichnet, daß** das Gehäuse (32) kompakt, stabil und gegenüber Umgebungseinflüssen abgedichtet ist.

17. Pedalweggebereinheit nach einem der Ansprüche 1 bis 16, **dadurch gekennzeichnet, daß** die Pedalweggebereinheit als vormontierbares Modul ausgebildet ist.

## Claims

1. Pedal travel transmitting unit for determining a pedal travel position, having at least one actuation lever (38) which is disposed in a housing (32), is mounted on an axis of rotation (36) and can be rotated by a pedal (10, 12) and having at least one switch element (56), the actuation member (58) of which can be actuated by rotation of the actuation lever (38), the housing (32) having a housing opening (44) which makes possible external access to a region of the actuation lever (38) which lies outwith the axis of rotation (36), in order to subject the actuation lever (38) to the effect of a pedal movement, **characterised in that** the actuation lever (38) acts on at least one measuring device (114, 118) for producing an electrical signal which corresponds to the respective rotational position of the actuation lever (38).

2. Pedal travel transmitting unit according to claim 1, **characterised in that** the actuation lever (38) is an angled lever which is mounted rotatably on the first leg end (40) thereof and the second leg end (42) of which protrudes with the end side (46) thereof from the housing opening (44) and is subjected to a pedal force which acts substantially perpendicularly on the end side (44).

3. Pedal travel transmitting unit according to claim 1 or 2, **characterised in that** the housing (32) is sealed at the housing opening (44) relative to the actuation lever (38), in particular relative to the second leg end (42), by a flexible rubber sleeve (54).

4. Pedal travel transmitting unit according to claim 2 or 3, **characterised in that** the actuation member (58) of the switch element (56) is disposed in the region of the bend (68) of the angled lever (38) in and approximately opposite the end side (44) of the second leg end (42).

5. Pedal travel transmitting unit according to one of the claims 1 to 4, **characterised in that** the switch element (56) is configured as a microswitch with a pushbutton (58).

6. Pedal travel transmitting unit according to one of the claims 1 to 5, **characterised in that** a spring tongue (60) is mounted on the actuation lever (38), the free end of which acts on the actuation member (58) of the switch element (56).

7. Pedal travel transmitting unit according to claim 6, **characterised in that** at least one limit stop (64) is disposed in the movement path of the spring tongue (60) and delimits the excursion range of the spring tongue (60).

8. Pedal travel transmitting unit according to one of the claims 1 to 7, **characterised in that** a spring (52) engages on the actuation lever (38), in particular in the bend region (68) thereof, which spring forces the actuation lever (38) in opposition to the force direction of a pedal actuation.

9. Pedal travel transmitting unit according to one of the claims 1 to 8, **characterised in that** the measuring device has at least one Hall sensor (118) and at least one magnet (114).

10. Pedal travel transmitting unit according to claim 9, **characterised in that** a permanent magnet (114) is disposed on the actuation lever (38) and **in that** the Hall sensor (118) is disposed in a stationary manner in the housing (32) in the magnetic field range of the permanent magnet (114).

11. Pedal travel transmitting unit according to claim 9 or 10, **characterised in that** the permanent magnet (114) is disposed on the actuation lever (38) in the region of the axis of rotation (36) and is orientated such that the line (116) thereof which connects the magnetic north pole (N) and the magnetic south pole (S) extends approximately perpendicularly to the axis of rotation (36).

12. Pedal travel transmitting unit according to one of the claims 9 to 11, **characterised in that** the Hall sensor (118) is disposed approximately in the central plane (120) which extends between the magnetic north pole (N) and the magnetic south pole (S) of the permanent magnet (114).

13. Pedal travel transmitting unit according to one of the claims 1 to 12, **characterised in that** a magnetic shield for the measuring device (114, 118) is disposed in the housing (32).

14. Pedal travel transmitting unit according to one of the claims 1 to 13, **characterised in that** two actuation levers (38) are mounted rotatably in the housing (32) and are subjected respectively to the effect of an associated brake pedal (10, 12) and **in that** at least one switch element (56) and/or at least one measuring device (114, 118) is assigned to each actuation lever (38).

15. Pedal travel transmitting unit according to one of the claims 1 to 14, **characterised in that** at least one electrical relay and/or at least one printed circuit board with electrical wiring is disposed in the housing (32).

16. Pedal travel transmitting unit according to one of the claims 1 to 15, **characterised in that** the housing (32) is compact, stable and sealed against environmental influences.

17. Pedal travel transmitting unit according to one of the claims 1 to 16, **characterised in that** the pedal travel transmitting unit is configured as a module which can be pre-assembled.

## Revendications

1. Capteur de position de pédale destiné à déterminer une position de la pédale, comportant au moins un levier de manoeuvre (38), qui est logé dans un boîtier (32), est monté sur un axe de rotation (36) et qui peut tourner au moyen d'une pédale (10, 12), et comportant au moins un élément de commande (56), dont l'organe de manoeuvre (58) est apte à être actionné sous l'effet d'une rotation du levier de manoeuvre (38), le boîtier (32) comportant une ouverture (44) permettant d'accéder de l'extérieur vers une zone du levier de manoeuvre (38), située en dehors de l'axe de rotation (36), afin que le levier de manoeuvre (38) soit exposé à l'influence d'un mouvement de la pédale, **caractérisé en ce que** le levier de manoeuvre (38) agit sur au moins un dispositif de mesure (114, 118) destiné à générer un signal électrique correspondant à la position de rotation respective du levier de manoeuvre (38).

2. Capteur de position de pédale selon la revendication 1, **caractérisé en ce que** le levier de manoeuvre (38) est un levier coudé, qui est monté rotatif sur l'extrémité de sa première branche (40) et dont l'extrémité de sa deuxième branche (42) s'avance avec sa face frontale (46) hors de l'ouverture (44) du boîtier et est exposée à une force exercée par la pédale sensiblement perpendiculairement sur la face frontale (46).

3. Capteur de position de pédale selon la revendication 1 ou 2, **caractérisé en ce que** le boîtier (32), au niveau de l'ouverture (44), est rendu étanche, au moyen d'une manchette en caoutchouc (54) flexible, par rapport au levier de manoeuvre (38), en particulier par rapport à l'extrémité de la deuxième branche (42).

4. Capteur de position de pédale selon la revendication 2 ou 3, **caractérisé en ce que** l'organe de manoeuvre (58) de l'élément de commande (56) est disposé dans la zone du coude (68) du levier coudé (38) et à peu près en face de la face frontale (46) de l'extrémité de la deuxième branche (42).

5. Capteur de position de pédale selon l'une quelconque des revendications 1 à 4, **caractérisé en ce que** l'élément de commande (56) est réalisé sous la forme d'un microcontact avec un bouton de commande à pression (58).

6. Capteur de position de pédale selon l'une quelconque des revendications 1 à 5, **caractérisé en ce qu'**une languette flexible (60), dont l'extrémité libre agit sur l'organe de manoeuvre (58) de l'élément de commande (56), est fixée sur le levier de manoeuvre (38).

7. Capteur de position de pédale selon la revendication 6, **caractérisé en ce qu'**au moins une butée (64), qui délimite la zone de déploiement de la languette flexible (60), est disposée dans la trajectoire de mouvement de la languette flexible (60).

8. Capteur de position de pédale selon l'une quelconque des revendications 1 à 7, **caractérisé en ce qu'**un ressort (52), qui pousse le levier de manoeuvre (38) à l'encontre de la direction de la force d'un actionnement de pédale, entre en prise avec le levier de manoeuvre (38), en particulier dans sa zone coudée (68).

9. Capteur de position de pédale selon l'une quelconque des revendications 1 à 8, **caractérisé en ce que** le dispositif de mesure comporte au moins un capteur à effet Hall (118) et au moins un aimant (114).

10. Capteur de position de pédale selon la revendication 9, **caractérisé en ce qu'**un aimant permanent (114) est disposé sur le levier de manoeuvre (38), et **en ce que** le capteur à effet Hall (118) est disposé de manière localement fixe dans le boîtier (32) dans la zone du champ magnétique de l'aimant permanent (114).

11. Capteur de position de pédale selon la revendication 9 ou 10, **caractérisé en ce que** l'aimant permanent (114) est monté sur le levier de manoeuvre (38) dans la zone de l'axe de rotation (36) et est orienté de telle sorte que sa ligne (116) reliant le pôle nord magnétique (N) et le pôle sud magnétique (S) est sensiblement perpendiculaire à l'axe de rotation (36).

12. Capteur de position de pédale selon l'une quelconque des revendications 9 à 11, **caractérisé en ce que** le capteur à effet Hall (118) est agencé à peu près dans le plan médian (120) passant entre le pôle nord magnétique (N) et le pôle sud magnétique (S) de l'aimant permanent (114).

13. Capteur de position de pédale selon l'une quelconque des revendications 1 à 12, **caractérisé en ce qu'**un blindage magnétique pour le dispositif de mesure (114, 118) est agencé dans le boîtier (32).

14. Capteur de position de pédale selon l'une quelconque des revendications 1 à 13, **caractérisé en ce que** dans le boîtier (32) sont montés rotatifs deux leviers de manoeuvre (38) qui sont exposés chacun à l'influence d'une pédale de frein (10, 12) associée et **en ce qu'**au moins un élément de commande (56) et/ou au moins un dispositif de mesure (114, 118) sont associés à chaque levier de manoeuvre (38).

15. Capteur de position de pédale selon l'une quelconque des revendications 1 à 14, **caractérisé en ce qu'**au moins un relais électrique et/ou au moins une plaquette imprimée avec un circuit électrique sont agencés dans le boîtier (32).

16. Capteur de position de pédale selon l'une quelconque des revendications 1 à 15, **caractérisé en ce que** le boîtier (32) est compact, stable et étanche face aux influences de l'environnement.

17. Capteur de position de pédale selon l'une quelconque des revendications 1 à 16, **caractérisé en ce que** le capteur de position de pédale est réalisé sous forme de module pouvant être préfabriqué.
